# EUROPEAN PATENT SPECIFICATION

(11) **EP 2 379 429 B1**
(45) Date of publication and mention of the grant of the patent: **01.05.2013**
(21) Application number: 09810822.8
(22) Date of filing: 18.12.2009
(51) Int. Cl.: B65G 33/14, B65G 53/48

(54) **TRANSPORT PLANT**
TRANSPORTVORRICHTUNG
INSTALLATION DE TRANSPORT

(30) Priority: 19.12.2008 IT RA20080051
(43) Date of publication of application: 26.10.2011
(73) Proprietor: Ragazzini S.r.l., 40818 Faenza (IT)
(72) Inventor: BARUZZI, Roberto, I-48026 Russi (RA) (IT)
(74) Representative: Roncuzzi, Davide
(86) International application number: PCT/IB2009/007828
(87) International publication number: WO 2010/070438

(56) References cited:
- EP-A- 0 695 583
- EP-A- 1 079 178
- WO-A-2004/005170
- CN-Y- 200 948 970
- DE-A1-102005 059 856
- GB-A- 2 029 355
- GB-A- 2 210 345

## Description

The present invention relates to a transport plant according to the preamble of claim 1 and to a corresponding method for transporting food products. In particular, the present invention relates to a transport plant for transporting food products under controlled atmosphere. In more detail, the present invention relates to a transport plant for transporting food products under controlled atmosphere and, in this regard, provided with an entrance station arranged upstream of a duct and comprising a feeding member suitable to close this duct in a fluid - tight manner and usable according to a method for feeding raw food products along a given path inside this plant.

### BACKGROUND TO THE INVENTION

It is well known that in the food processing sector some products are particularly sensitive to the composition of the atmosphere, in which they are immersed and treated. It can be frequently observed that fresh products, such as for example fruit and vegetables, quickly react to the presence of oxygen, changing colour and/or flavour, and the results can be unpleasant, thus making the end product poorly appreciable, or anyway of quality lower than the expectations.

In the case of transport plants used to feed the harvest of vine of given grape types, in particular of bunches of grape, to a collect station or to a crushing station, it is extremely important to avoid the compression of the grapes and of the seeds, as it causes juice loss and oxidation of the flesh of the grapes. Furthermore, the fracture of the stalks shall be avoided, as it causes the release of substances and vapours with undesired flavours that would jeopardize the typical features of the grape juice of a given grape type and therefore of the end product, or would require a preliminary treatment when starting the vinification process. Examples of known transport plants of this kind are reported in patent documents DE102005059P56 and EP1079178.

CN 200948970 discloses a plant according to the preamble of claim 1.

In the light of above, it is therefore clearly apparent that, when the characteristics of the processed product, such as for example flavour and colour, shall remain substantially unchanged relative to that of the fresh fruits to be treated, it could be useful to design transport plant operating under controlled atmosphere, in order to preserve the features of the products during production. The additional cost of the plant will be sustained by the users of the end product, even if this drawback can result in different economic effects depending upon the industry sector, according to the sensitivity of the clients to the greater level of quality. This additional cost can be interpreted for example as a natural one in the field of wines of great value, even if sometimes the increase in the quality of the final product derives exactly from the use of a plant of this type, combined with an originally poor raw product. In similar cases it is also possible that the original reputation of the product prevents the end product from being positioned in a sector of higher range, and therefore the high additional cost of the plant avoids the diffusion thereof and makes the market of these technologically advanced plants poorly profitable.

Therefore, the problem of treating raw food products in environments under controlled atmosphere with reduced costs is currently unsolved, and represents an interesting challenge for the applicant, in order to facilitate the production of food product of a quality comparable to the original raw product.

In view of the situation described above, it would be desirable to have available a plant for treating raw food products, which operates according to a simple and economical method and which, in addition to enabling to limit and possibly to overcome the typical drawbacks of the art illustrated above, could define a new standard for these types of plant.

### SUMMARY OF THE PRESENT INVENTION

The present invention relates to a transport plant for transporting food products according to claim 1. In particular, the present invention relates to a transport plant for transporting food products under controlled atmosphere. In more detail, the present invention relates to a transport plant for transporting food products under controlled atmosphere and, in this regard, provided with an entrance station arranged upstream of a duct and comprising a feeding member suitable to close this duct in a fluid-tight manner and usable according to a method for feeding raw food products along a given path inside this plant.

The object of the present invention is to provide a transport plant for transporting food products, which allows the disadvantages described above to be solved, and which is suitable to satisfy a plurality of requirements that to date have still not been addressed, and therefore suitable to represent a new and original source of economic interest and capable of modifying the current market of these plants.

According to the present invention, a transport plant for transporting food products is provided, whose main characteristics will be described in at least one of the appended claims.

A further object of the present invention is to provide a method for feeding raw food products inside a plant for the processing thereof.

According to the present invention, a method according to claim 11 is furthermore provided for feeding raw food products inside a plant for the processing thereof, the main characteristics of this method being described in at least one of the appended claims.

### BRIEF DESCRIPTION OF DRAWINGS

Further characteristics and advantages of the transport plant for food products and of the respective method of use according to the present invention will be more apparent from the description below, set forth with reference to the accompanying drawings, which illustrate a non-limiting example of embodiment, in which identical or corresponding parts of the plant are identified by the same reference numbers. In particular:
- figure 1 is a schematic, partially cut away view of a first preferred embodiment of the present invention;
- figure 2 is a side elevation view in enlarged scale of a detail extracted from figure 1, cut away according to a longitudinal plane corresponding to the central line II-II of figure 1;
- figure 3 is a side elevation view of a second version of figure 2;
- figure 4 is a schematic, partially cut away view of a second embodiment of figure 1;
- figure 5 is a side elevation view in enlarged scale of a detail extracted from figure 4, cut away according to a longitudinal plane corresponding to the central line V-V of figure 1.

### DETAILED DESCRIPTION OF THE PRESENT INVENTION

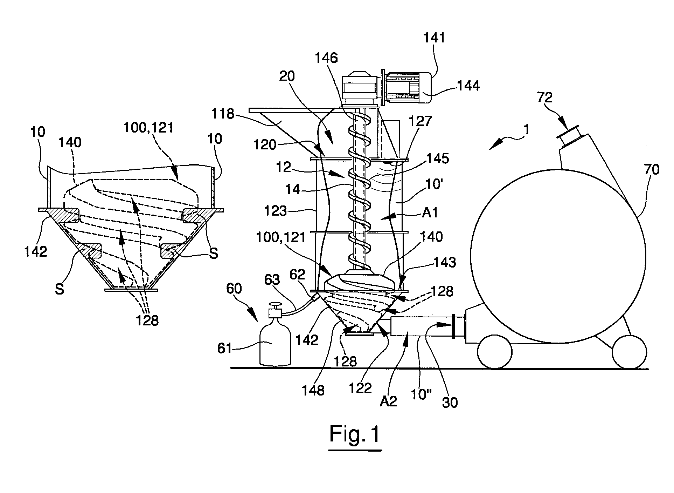

In figure 1 number 1 indicates, in its entirety, a transport plant for transporting raw products, fruit or vegetables to be treated for producing juices, such as for example, although without limitation, bunches of grapes, tomatoes or the like.

Always with reference to figure 1, the plant 1 comprises a fluid-tight feeding duct 10 arranged between an entrance station 20 and an exit station 30, which is in turn arranged downstream of a peristaltic pump 70, known and therefore illustrated only schematically in figure 1. This pump 70 is designed so as to receive from the exit station 30 stalks, grapes and liquid, and to feed them together to an exit mouth 72.

Downstream of the entrance station 20 a feeding unit 12 is provided, which is delimited by a first mouth 120 of entrance of raw products and by a second mouth 122 of exit of the same raw products. These first and second mouths 120 and 122 delimit a first segment 10' of the duct 10, ending with a truncated conical vessel 142 and continuing with a second segment 10" until the exit station 30. With reference to figure 1, the two segments 10' and 10" of the duct 10 delimit at the side a first environment A1 and a second environment A2 respectively, which are mutually in fluid-tight communication through the second mouth 122 and which overall identify a path of given shape under controlled atmosphere, extending between the entrance and exit stations 20 and 30.

The feeding unit 12 comprises a feeding member 14, which is arranged between the first mouth 120 and the second mouth 122 inside a cylindrical portion 123 of the first segment 10'. In particular, the feeding member 14 comprises an Archimedean screw 14, which ends with a conical helix 140, contained inside the vessel 142, and is suitable axially to rotate inside the vessel 142. This vessel 142 houses the helix 140 in a coaxial manner starting from a respective coupling portion 143 delimiting at the top the vessel 142 in figure 1 and presents a substantially vertical axis in figure 1. The helix 140 and the vessel 142 are shape coupled and present a vertex angle that, at this end, is substantially identical. This angle measures a width comprised inside a range of 70°-90°. In view of the above description, the coupling portion 143 represents an entrance mouth/first mouth for the vessel 142. As illustrated in figure 1, this vessel 142 is arranged preferably vertically for purposes, which will be explained hereunder, and delimits at the side the first controlled atmosphere environment A1.

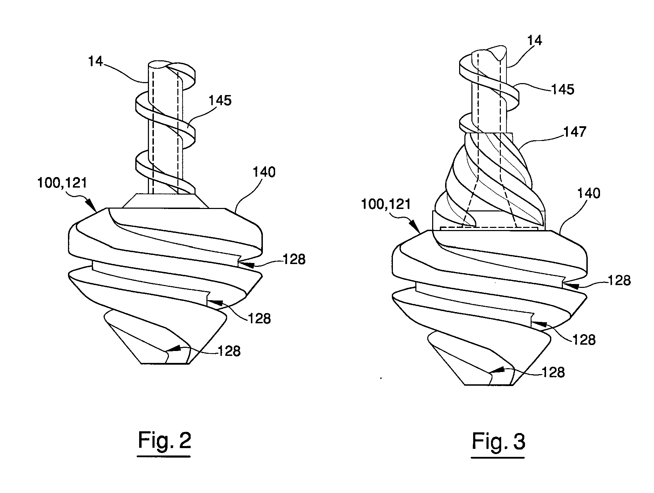

The feeding unit 12 furthermore comprises an actuating device 141, provided with a rotary actuator 144 presenting a drive shaft 146, coaxial with the actuator 144 and rigidly connected to the Archimedean screw 14 to actuate the respective helix 140. With particular reference to figures 1 and 2, this helix 140 presents preferably a cone shape, whose width is substantially identical to that of the vessel 142. In more detail, the helix 140, together with the vessel 142, delimits at least one truncated conical duct 128, which engages the first segment 10' upstream of the second mouth 122, develops in an helical manner and presents each own cross section S of a substantially trapezoidal shape, as visible in the enlarged detail of figure 1, wherein these cross sections S have been highlighted through section lines. In particular, each truncated conical duct 128, being obtained inside the helix 140, is movable in an axially rotatable manner through the drive shaft 146, and each section S is shaped as a right trapezium elongated towards the outside, whose hypotenuse is parallel to the conical surface of the vessel 142. Furthermore, to avoid that the decrease of the bending radius of the truncated conical duct 128 towards the second mouth 122, and the shrinkage of the vessel 142 cause the extrusion of the product transported along the first segment 10', the helix 140 is shaped with a pitch variable as the radius of the truncated conical duct 128 decreases, so as to maintain constant the transport volume, which is associated with each single turn and can be engaged by the raw material to be fed to the second mouth 122 and therefore to the second segment 10" of the duct 10. Therefore, the pitch of the helix 140 increases by proceeding towards the second segment 10" and the truncated conical duct 128 presents each cross section S obtained by cutting the helix 140 by means of an axial plane of substantially constant width. Maintaining a constant value for the transport volume associated to each turn of the helix 140 minimises the risk that the above described extrusion occurs, which would result in the undesired fracture of the wooden parts of the stalks and therefore in the release of substances and vapours with unpleasant flavours that would jeopardise the quality of the produced grape juice and therefore of the end product.

Obviously, if the helix 140 presents more than one flight, to each of them a respective truncated conical duct 128 will correspond for transporting the raw material to the second segment 10" of the duct 10 and therefore to the pump 70.

The helix 140 is preferably produced in plastic material, as this material damages the grape stalks less than the metal, avoiding the breakage thereof and therefore the exit of wooden substances, which could contaminate the grape juice. It should be furthermore noted that the Archimedean screw 140 can present any number of helical flights, for example it can present a single flight or two distinct flights as illustrated in figures 1 and 2.

Again with reference to figure 1, the first mouth 120 is contained inside, and it is therefore preceded by, a conveyor body 118, which is suitable to receive and contain raw product to present a first layer thereof, shaped in a manner substantially identical to a cylindrical column, to each truncated conical duct 128, so as to seal the first segment 10' at the side of the first mouth 120, and to allow the formation of an atmosphere with controllable composition. In this regard, the plant 1 comprises a conditioning device 60 for conditioning the composition of the atmosphere inside the vessel 142. This conditioning device 60, represented, for the sake of simplicity, through a cylinder 61 and a pressurized duct 63, comprises a plurality of gas injectors 62, of which, for the sake of simplicity, only one is represented in figure 1. Each injector 62 can be preferably connected in a fluid-tight manner to a peripheral wall 148 of the conical vessel 142 between the first mouth 120 and the second mouth 122, preferably, although without limitation, below the first mouth 120. Alternatively, according to a variant not illustrated in the attached figures, the injectors 62 can be also or exclusively arranged along the first segment 10' of the duct 10 surrounding the first portion of the drive shaft 146 at the side of the conveyor body 118. In addition to this, some injectors 62 can be used also to diffuse disinfectant or washing liquids for the transported material, as well as gases for conditioning the atmosphere of the first environment A1.

In view of the above description, also the first mouth 120 presents a cylindrical conformation and the first portion 123 is centrally crossed by the drive shaft 146. The Archimedean screw 14 presents, along the cylindrical segment 123, downstream of the drive shaft 146, a substantially cylindrical helical segment 145, with reduced peripheral extension, whose object is to handle the load of raw product contained in the first segment 10' and to facilitate the flow thereof towards the helical truncated conical duct 128. The helix 140 extends from the coupling portion 143 of the vessel 142 and is delimited at the top by a first turn 100, suitable to define a substantially plane rotatable plate 121 to gather quantities of food product, which are sufficient to close the Archimedean screw 14 in a fluid tight manner at the side of the first mouth 120, and to exert a pressure sufficient to feed each truncated conical duct 128.

Furthermore, the conveyor body 118 comprises a level sensor 127 suitable to monitor a height of a columns of raw product upstream of the first mouth 120, and therefore inside the conveyor body 118.

The use of the transport plant 1 is clearly apparent in view of the above description. However, it should be useful to specify that the structure of the tool has been chosen "vertical", contrarily to the common use of horizontal Archimedean screws, for the following reasons: 1) the tube-shape, with vertical development, allows the product to be aggregated on an area of minimum extension but with a relatively high column, where it is compressed due to gravity reducing the presence of air at the minimum; 2) the symmetricity of the container facilitates an homogeneous dispersion of the chemically inert gas, which can be insufflated preferably from more symmetric points arranged on a high circumference of the cone; 3) the reduced transport speed and the maintenance of the transport volume for turn of the Archimedean screw 140 at a substantially constant value allows ensuring the integrity of the product.

At this point it should be again underlined that, in order to preserve the integrity of the product transported by the helix 140, it is necessary to avoid the extrusion of the product fed from the first mouth 120 to the second mouth 122 as the vessel 142 shrinks. This can be obtained by acting on the different construction parameters of the helix 140 and, in any case, also maintaining the trapezium shape and the extension of the base of each section S unchanged, and increasing the pitch of the helix 140 as the distance of the section S from the drive shaft 146 decreases, i.e. as the bending radius of the Archimedean screw 140 decreases. In this way it will be possible to maintain the transport volume associated to each turn of the helix 140 substantially constant.

With reference to the feeding method for feeding raw food products inside this plant 1, it should be advisable to specify that this method comprises a phase of feeding continuously raw food material to the second mouth 122 through the conveyor body 118 and, cascading, through the first mouth 120 and therefore through the helix 140 of the Archimedean screw 14. This phase of feeding continuously raw food material comprises a sub-phase of forming a substantially compact layer with the product at the side of the first mouth 120 so as to seal the feeding unit 12 and to allow the formation of an atmosphere of controllable composition at least inside the second segment 10" and downstream of this part of the plant 1. It should be noted that the phase of continuously feeding raw food product is carried out at a constant transport volume for each turn of the helix 140 and, therefore, inside the environment A1 corresponding to the segment 10' of the path P. This allows the food product to be maintained at substantially atmospheric pressure, and therefore at a pressure substantially identical to the pressure of picking up this product from the respective tree, and therefore the pressure inside the container from which this raw product is picked up before carrying out the phase of continuously feeding it.

The phase of continuously feeding raw food material can comprise a phase of supplying gas between the first mouth 120 and the second mouth 122. This gas presents a given composition, suitable to cause the formation of a controlled atmosphere of substantially inert type, which prevents the formation of oxidation reactions on the grape fed to the second mouth 122 and on the grape juice produced by the pressure exerted by the column of raw material.

In addition to what described above, it should be specified that the first portion 123 presents a longitudinal extension sufficient to define a sort of lid for each helical truncated conical duct 128, which allows the transport of raw material towards the second duct 10" and the pump 70 to be considered substantially anaerobic. It should be furthermore noted that the mass of the raw material contained inside the first portion 123 causes a pressure on the material arranged, in use, at the mouth of each helical truncated conical segment 128, which allows, together with adequate adjustments of the speed of the helix 140 and of the pump 70, to produce the so-called "crushing". This term indicates a slight crushing of a grape, causing the exit of a minimum portion of grape juice. The soft crushing of a multiplicity of grapes can therefore cause the production of a significant quantity of juice and, by adjusting adequately the flow rate of the pump 70, it is therefore possible to produce grape juice in a quantity sufficient to produce a hydraulic bung upstream of the second segment 10". The stay time of the grape juice arranged upstream of the second segment 10" causing the hydraulic bung is in any case reduced, and therefore, also in presence of a minimum of air in the interspaces inevitably present between the grapes contained inside the duct 10', the oxygen rate of this portion of juice remains tolerable from an oenological point of view. Therefore, the presence of the hydraulic "bung", the reduced quantity of air in the segment 10', and therefore above the level of the second segment 10", caused by the column of raw material above the helix 140, and the shortest stay time interval of the contact between the juice and the residual air allow using the plant 1 without using the conditioning device 60 for conditioning the composition of the atmosphere inside the vessel 142 and therefore without using inert gas, which must be in any case disposed downstream of the pump 70 and anyway when arriving to a press or another controlled atmosphere environment to avoid problems, due to overpressure.

Lastly, it is apparent that modifications and variants can be made to the plant described and illustrated herein, without however departing from the protective scope of the present invention.

For example, with reference to figure 3, the Archimedean screw 14 can comprise a screw segment 147, with increasing radius provided with more flights, whose object is to facilitate the entrance in the truncated conical ducts 128 delimited by the helix 140 and by the vessel 142.

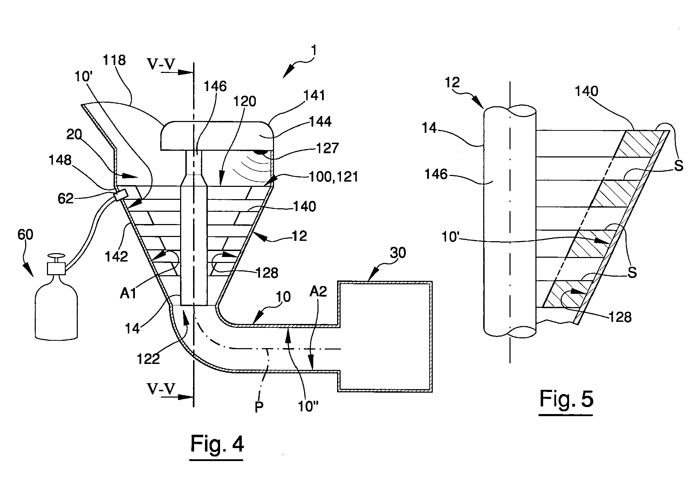

With reference to figure 4, the plant can be designed by limiting the extension of the first segment 10' of the duct 10 to the single vessel 142. In this case, the effect of maintaining a transport volume per turn constant, can be obtained also through a feeding unit 12 provided with an helix 140 shaped in a different manner relative to that illustrated in figures 1 and 2. Furthermore, it is easy to note that in this case the coupling portion 143 of the vessel 142 and the first mouth 120 mutually match. In particular, with reference to figure 5, the helix 140 can present such a shape that each cross section S of each truncated conical duct 128 is substantially shaped as a parallelogram, whose height and base change extension inside the vessel 142 depending upon the corresponding radius.

## Claims

1. A transport plant (1) for transporting food products; said plant being provided with a feeding duct (10) arranged between an entrance station (20) and an exit station (30) and provided with a first segment (10') and with a second segment (10") connected to each other in a fluid-tight manner; said first segment (10') extending between a first mouth (120) and a second mouth (122) and being delimited by a substantially conical vessel (142) at the side of said second segment (10''); an helical feeding member (14) being associated to said first segment (10'); wherein said feeding member (14) comprises an Archimedean screw (14) provided with a conical helix (140) suitable to rotate axially; said helix (140) shape engaging said vessel (142) and integrating at least one helical truncated conical duct (128) **characterised in that** the truncated conical duct (128) has an increasing pitch from said first mouth (120) toward said second mouth (122) and presents a cross section (S) of substantially constant extension as the bending radius of said Archimedean screw (14) decreases.

2. A plant according to claim 1, **characterised in that** the volume of each portion of each said truncated conical duct (128) associated to a respective turn of said helix (140) presents a given and substantially constant value.

3. A plant according to claim 2, **characterised in that** said helix (140) is delimited at the top by a first turn (100) suitable to define a substantially plane rotatable plate with reduced height, arranged so as to gather quantities of food product, which are sufficient to close said Archimedean screw (14) in a fluid tight manner at the side of said first mouth (120).

4. A plant according to any one of claims 1 to 3, **characterised in that** each cross section (S) of at least one said truncated conical duct (128) presents substantially a parallelogram conformation.

5. A plant according to any one of claims 1 to 3, **characterised in that** each cross section (S) of at least one said truncated conical duct (128) presents substantially a trapezium conformation.

6. A plant according to claim 5, **characterised in that** said cross section (S) presents substantially a right trapezium conformation.

7. A plant according to claim 5 or 6, **characterised by** comprising conditioning means (60) for conditioning the atmospheric composition delimited by said vessel (142); said conditioning means (60) comprising at least an injector (62) able to insert fluid inside said conical vessel (142) between said first mouth (120) and said second mouth (122).

8. A plant according to any one of claims 2 to 7, **characterised in that** said first mouth (120) is preceded by a conveyor body (118) suitable to house a layer of said food products to seal said first segment (10') and to cause the formation of an atmosphere with controllable composition inside said second segment (10'').

9. A plant according to claim 8, **characterised in that** said conveyor body (118) comprises a level sensor (127) suitable to monitor a height of a column of product inside said conveyor body (118).

10. A plant according to any one of the previous claims, **characterised in that** said helix (140) is preferably produced in plastic material.

11. A feeding method for feeding raw food products inside a plant (1) according to claim 1;
said method comprising a phase of continuously feeding raw food material through the respective said second mouth (122); wherein said phase of feeding continuously raw food material comprises a sub-phase of forming a substantially compact layer with said product on said helix (140) to close in a fluid tight manner said Archimedean screw (14) at the side of said first mouth (120).

12. A method according to claim 11, **characterised in that** each said truncated conical duct (128) presents each own cross section (S) of extension substantially constant proceeding from said first mouth (120) to said second mouth (122).

13. A method according to claim 11 or 12, **characterised in that** said helix (140) is delimited at the top by a first turn (100) suitable to define a substantially plane rotatable plate with reduced height so as to gather quantities of food product, which are sufficient to close said Archimedean screw (14) in a fluid tight manner at the side of said first mouth (120).

14. A method according to any one of claims 11 to 13, **characterised in that** said phase of continuously feeding raw food material comprises a phase of feeding gas between said first and second mouths (120) (122).

15. A method according to claim 14, **characterised in that** said gas presents a given composition suitable to cause the formation of a controlled atmosphere of the substantially inert type.

## Patentansprüche

1. Transportanlage (1) zum Transportieren von Nahrungsmitteln, wobei die Anlage mit einer Zuführleitung (10) versehen ist, die zwischen einem Eingangsposten (20) und einem Ausgangsposten (30) eingerichtet und mit einem ersten Segment (10') und mit einem zweiten Segment (10"), die miteinander in einer fluiddichten Art verbunden sind, eingerichtet ist, wobei sich das erste Segment (10') zwischen einer ersten Mündung (120) und einer zweiten Mündung (122) erstreckt und von einem im Wesentlichen kegelförmigen Gefäß (142) an der Seite des zweiten Segments (10") abgegrenzt ist; ein schraubenförmiges Zuführelement (14), das mit dem ersten Segment (10') verbunden ist; wobei das Zuführelement (14) eine archimedische Schraube (14) aufweist, die mit einer kegelförmigen Schraube (140) versehen ist, die geeignet ist, um axial zu drehen; wobei die Schraube (140) formschlüssig in das Gefäß (142) eingreift und wenigstens eine schraubenförmige stumpfe kegelförmige Leitung (128) enthält; **dadurch gekennzeichnet, dass** die stumpfe kegelförmige Leitung (128) eine zunehmende Steigung von der ersten Mündung (120) zu der zweiten Mündung (122) hat und einen Querschnitt (S) mit im Wesentlichen konstanter Ausdehnung mit dem Abnehmen des Biegeradius der archimedischen Schraube (14) aufweist.

2. Transportanlage nach Anspruch 1, **dadurch gekennzeichnet, dass** das Volumen jedes Teils jeder stumpfen kegelförmigen Leitung (128), die mit einer jeweiligen Drehung der Schraube (140) verbunden ist, einen gegebenen und im Wesentlichen konstanten Wert aufweist.

3. Anlage nach Anspruch 2, **dadurch gekennzeichnet, dass** die Schraube (140) an der Oberseite durch eine erste Drehung (100) begrenzt ist, die geeignet ist, um eine im Wesentlichen ebene drehbare Platte mit verringerter Höhe zu definieren, die derart eingerichtet ist, dass sie Mengen von Nahrungsmittel sammelt, die ausreichend sind, um die archimedische Schraube (14) in einer fluiddichten Art an der Seite der ersten Mündung (120) zu schließen.

4. Anlage nach einem der Ansprüche 1 bis 3, **dadurch gekennzeichnet, dass** jeder Querschnitt (S) der wenigstens einen stumpfen kegelförmigen Leitung (128) im Wesentlichen eine Parallelogrammgestaltung aufweist.

5. Anlage nach einem der Ansprüche 1 bis 3, **dadurch gekennzeichnet, dass** jeder Querschnitt (S) der wenigstens einen stumpfen kegelförmigen Leitung (128) im Wesentlichen eine Trapezgestaltung aufweist.

6. Anlage nach Anspruch 5, **dadurch gekennzeichnet, dass** der Querschnitt (S) im Wesentlichen eine rechtwinklige Trapezgestaltung aufweist.

7. Anlage nach Anspruch 5 oder 6, **dadurch gekennzeichnet, dass** sie Aufbereitungsmittel (60) zum Aufbereiten der atmosphärischen Zusammensetzung, die von dem Gefäß (142) abgegrenzt wird, aufweist, wobei die Aufbereitungsmittel (60) wenigstens eine Düse (62) aufweisen, die fähig ist, Fluid in das kegelförmige Gefäß (142) zwischen der ersten Mündung (120) und der zweiten Mündung (122) einzufügen.

8. Anlage nach einem der Ansprüche 2 bis 7, **dadurch gekennzeichnet, dass** der ersten Mündung (120) ein Fördererkörper (118) vorangeht, der geeignet ist, um eine Schicht der Nahrungsmittel aufzunehmen, um ein erstes Segment (10') abzudichten und das Bilden einer Atmosphäre mit einer kontrollierten Zusammensetzung innerhalb des zweiten Segments (10") zu veranlassen.

9. Anlage nach Anspruch 8, **dadurch gekennzeichnet, dass** der Fördererkörper (118) einen Niveausensor (127) aufweist, der geeignet ist, um eine Höhe einer Säule des Produkts innerhalb des Fördererkörpers (118) zu überwachen.

10. Anlage nach einem der vorhergehenden Ansprüche, **dadurch gekennzeichnet, dass** die Schraube (140) vorzugsweise aus einem Kunststoff hergestellt ist.

11. Zuführverfahren zum Zuführen roher Nahrungsmittel in eine Anlage (1) nach Anspruch 1, wobei das Verfahren eine Phase des ununterbrochenen Zuführens roher Nahrungsmittel durch die jeweilige zweite Mündung (122) aufweist, wobei die Phase des ununterbrochenen Zuführens roher Nahrungsmittel eine Subphase des Ausbildens einer im Wesentlichen kompakten Schicht mit dem Produkt auf der Schraube (140) aufweist, um die archimedische Schraube (14) an der Seite der ersten Mündung (120) auf fluiddichte Art zu verschließen.

12. Verfahren nach Anspruch 11, **dadurch gekennzeichnet, dass** jede stumpfe kegelförmige Leitung (128) jeden eigenen Querschnitt (S) mit im Wesentlichen konstanter Ausdehnung von der ersten Mündung (120) zu der zweiten Mündung (122) aufweist.

13. Verfahren nach Anspruch 11 oder 12, **dadurch gekennzeichnet, dass** die Schraube (140) an der Oberseite durch eine erste Drehung (100) begrenzt ist, die geeignet ist, um eine im Wesentlichen ebene drehbare Platte mit verringerter Höhe zu definieren, um Nahrungsmittelmengen zu sammeln, die ausreichend sind, um die archimedische Schraube (14) in einer fluiddichten Art an der Seite der ersten Mündung (120) zu schließen.

14. Verfahren nach einem der Ansprüche 11 bis 13, **dadurch gekennzeichnet, dass** die Phase des ununterbrochenen Zuführens roher Nahrungsmittel eine Phase des Zuführens von Gas zwischen der ersten und der zweiten Mündung (120) (122) aufweist.

15. Verfahren nach Anspruch 14, **dadurch gekennzeichnet, dass** das Gas eine gegebene Zusammensetzung aufweist, die geeignet ist, um das Bilden einer kontrollierten Atmosphäre des im Wesentlichen inerten Typs zu veranlassen.

## Revendications

1. Installation de transport (1) pour transporter des produits alimentaires ; ladite installation comportant un conduit d'alimentation (10) agencé entre une station d'entrée (20) et une station de sortie (30) et comportant un premier segment (10') et un second segment (10") reliés l'un à l'autre d'une manière étanche aux fluides ; ledit premier segment (10') s'étendant entre une première ouverture (120) et une seconde ouverture (122) et étant délimité par une cuve sensiblement conique (142) du côté dudit second segment (10"); un élément d'alimentation hélicoïdal (14) étant associé audit premier segment (10') ; ledit élément d'alimentation (14) comprenant une vis d'Archimède (14) comportant une hélice conique (140) apte à tourner axialement ; ladite forme d'hélice (140) venant en prise avec ladite cuve (142) et intégrant au moins un conduit conique tronqué hélicoïdal (128), **caractérisée par le fait que** le conduit conique tronqué (128) a un pas croissant à partir de ladite première ouverture (120) vers ladite seconde ouverture (122) et présente une section transversale (S) d'extension sensiblement constante à mesure que le rayon de courbure de ladite vis d'Archimède (14) décroit.

2. Installation selon la revendication 1, **caractérisée par le fait que** le volume de chaque partie de chaque conduit conique tronqué précité (128) associé à un tour respectif de ladite hélice (140) présente une valeur donnée et sensiblement constante.

3. Installation selon la revendication 2, **caractérisée par le fait que** ladite hélice (140) est délimitée en partie supérieure par un premier tour (120) apte à définir une plaque rotative sensiblement plane ayant une hauteur réduite, agencée de manière à rassembler des quantités de produit alimentaire qui sont suffisantes pour fermer ladite vis d'Archimède (14) d'une manière étanche aux fluides du côté de ladite première ouverture (120).

4. Installation selon l'une quelconque des revendications 1 à 3, **caractérisée par le fait que** chaque section transversale (S) d'au moins l'un conduit conique tronqué précité (128) présente sensiblement une conformation de parallélogramme.

5. Installation selon l'une quelconque des revendications 1 à 3, **caractérisée par le fait que** chaque section transversale (S) d'au moins l'un conduit conique tronqué précité (128) présente sensiblement une conformation de trapèze.

6. Installation selon la revendication 5, **caractérisée par le fait que** ladite section transversale (S) présente sensiblement une conformation de trapèze droit.

7. Installation selon l'une des revendications 5 ou 6, **caractérisée par le fait qu'**elle comprend des moyens de conditionnement (60) pour conditionner la composition atmosphérique délimitée par ladite cuve (142) ; lesdits moyens de conditionnement (60) comprenant au moins un injecteur (62) apte à introduire du fluide à l'intérieur de ladite cuve conique (142) entre ladite première ouverture (120) et ladite seconde ouverture (122).

8. Installation selon l'une quelconque des revendications 2 à 7, **caractérisée par le fait que** ladite première ouverture (120) est précédée par un corps de transporteur (118) apte à recevoir une couche desdits produits alimentaires pour fermer ledit premier segment (10') et pour amener la formation d'une atmosphère ayant une composition contrôlable à l'intérieur dudit second segment (10").

9. Installation selon la revendication 8, **caractérisée par le fait que** ledit corps de transporteur (118) comprend un capteur de niveau (127) apte à surveiller une hauteur d'une colonne de produit à l'intérieur dudit corps de transporteur (118).

10. Installation selon l'une quelconque des revendications précédentes, **caractérisée par le fait que** ladite hélice (140) est, de préférence, produite en matière plastique.

11. Procédé d'alimentation pour alimenter des produits alimentaires bruts à l'intérieur d'une installation (1) selon la revendication 1 ; ledit procédé comprenant une phase d'alimentation en continu de matière alimentaire brute à travers ladite seconde ouverture respective (122) ; ladite phase d'alimentation en continu de matière alimentaire brute comprenant une sous-phase de formation d'une couche sensiblement compacte avec ledit produit sur ladite hélice (140) pour fermer d'une manière étanche aux fluides ladite vis d'Archimède (14) du côté de ladite première ouverture (120).

12. Procédé selon la revendication 11, **caractérisé par le fait que** chaque conduit conique tronquée précité (128) présente chaque section transversale propre (S) d'extension sensiblement constante de ladite première ouverture (120) à ladite seconde ouverture (122).

13. Procédé selon l'une des revendications 11 ou 12, **caractérisé par le fait que** ladite hélice (140) est délimitée en partie supérieure par un premier tour (100) apte à définir une plaque rotative sensiblement plane ayant une hauteur réduite de façon à rassembler des quantités de produit alimentaire qui sont suffisantes pour fermer ladite vis d'Archimède (14) d'une manière étanche aux fluides du côté de ladite première ouverture (120).

14. Procédé selon l'une quelconque des revendications 11 à 13, **caractérisé par le fait que** ladite phase d'alimentation en continu de matière alimentaire brute comprend une phase d'alimentation de gaz entre lesdites première et seconde ouvertures (120) (122).

15. Procédé selon la revendication 14, **caractérisé par le fait que** ledit gaz présente une composition donnée appropriée pour amener la formation d'une atmosphère contrôlée du type sensiblement inerte.
